(19) **Europäisches Patentamt / European Patent Office / Office européen des brevets**

(11) **EP 1 426 653 B1**

(12) **EUROPEAN PATENT SPECIFICATION**

(45) Date of publication and mention
of the grant of the patent:
**29.08.2007 Bulletin 2007/35**

(51) Int Cl.:
*F16F 15/30* (2006.01)   *F16F 15/315* (2006.01)
*F16H 33/02* (2006.01)   *F02B 77/00* (2006.01)

(21) Application number: **02745953.6**

(22) Date of filing: **11.07.2002**

(86) International application number:
**PCT/JP2002/007041**

(87) International publication number:
**WO 2003/019039 (06.03.2003 Gazette 2003/10)**

(54) **LOSS REDUCING DEVICE OF ROTARY BODY**

VERLUSTREDUZIERUNGSVORRICHTUNG FÜR ROTATIONSKÖRPER

DISPOSITIF DE REDUCTION DES PERTES POUR UN CORPS ROTATIF

(84) Designated Contracting States:
**AT BE BG CH CY CZ DE DK EE ES FI FR GB GR
IE IT LI LU MC NL PT SE SK TR**

(30) Priority: **24.08.2001 JP 2001298471**

(43) Date of publication of application:
**09.06.2004 Bulletin 2004/24**

(73) Proprietors:
• **SAXA, Inc.**
 **Minato-ku**
 **Tokyo 108-8050 (JP)**
• **Yukigaya Institute Co., Ltd.**
 **Yokohama-shi, Kanagawa 222-0033 (JP)**

(72) Inventors:
• **SHIMADA, Satoru**
 **c/o TAMURA ELECTRIC WORKS, LTD.**
 **Meguro-ku, Tokyo 153-8923 (JP)**
• **SUZUKI, Shigeru**
 **c/o TAMURA ELECTRIC WORKS, LTD.**
 **Meguro-ku, Tokyo 153-8923 (JP)**
• **AOYAMA, Koichi**
 **c/o TAMURA ELECTRIC WORKS, LTD.**
 **Meguro-ku, Tokyo 153-8923 (JP)**

• **SEKI, Sumiko**
 **c/o YUKIGAYA INSTITUTE CO, LTD.**
 **Yokohama-shi, Kanagawa 222-0033 (JP)**
• **ITO, Takahiko**
 **c/o YUKIGAYA INSTITUTE CO, LTD.**
 **Yokohama-shi, Kanagawa 222-0033 (JP)**

(74) Representative: **Appelt, Christian W. et al
FORRESTER & BOEHMERT
Anwaltssozietät
Pettenkoferstrasse 20-22
80336 München (DE)**

(56) References cited:
**WO-A1-99/40668**   **CA-A1- 1 144 784**
**JP-A- 5 133 140**   **JP-A- 48 001 536**
**JP-A- 50 155 871**   **JP-A- 60 160 348**
**JP-U- 54 146 503**

• **DATABASE WPI Section PQ, Week 198524
Derwent Publications Ltd., London, GB; Class
Q63, AN 1985-145176 XP002341492 "Inertia
accumulator" & SU 1 126 741 A (MOSCOW
LIKHACHEV CAR WKS) 30 November 1984
(1984-11-30)**

**Description**

FIELD OF THE INVENTION

The invention relates to a device for rotating body windage loss reduction, comprising a rotating body such as a flywheel, rotatable in a fluid, such as gas, liquid, etc., and so forth, and a covering rotating body enclosing the rotating body, installed rotatably and coaxially with the rotating body, wherein the covering rotating body on the outer side of the rotating body is rotated accompanying rotation of the rotating body, thereby reducing fluid resistance to which the rotating body is subjected, resulting in reduction of resistance loss, that is, the so-called windage loss.

BACKGROUND OF THE INVENTION

As means for reducing fluid resistance to which a rotating body is subjected, it has been in practice either to remove a fluid in contact with the surface of the rotating body or to lower density of the fluid. To that end, it has been in practice to provide a vessel for housing the rotating body so as to reduce windage loss by producing a vacuum or reducing pressure inside the vessel.

However, in a vacuum, there occurs evaporation of lubricating oil for lubricating bearings to support the rotating body and outgassing from the rotating body itself due to a problem of manufacturing the rotating body, thereby lowering a degree of vacuum, so that it is difficult to maintain the degree of vacuum. As a result, in order to maintain a predetermined degree of vacuum, it becomes necessary to provide a vacuum pump that is a vacuum-maintaining device or a getter, but the vacuum-maintaining device requires cost of installation.

Further, as bearings causing no problem upon rotation at a high speed in a vacuum, there are known non-contact bearings such as magnetic levitation bearings, control type magnetic bearings (AMB), superconducting magnetic bearings (SMB), and so forth. However, there is required large consumption of energy for maintaining a magnetic levitation condition or superconducting condition under which those bearings can be used, so that those bearings have not come as yet to have satisfactory performance in use for a rotating body such as, for example, a flywheel for storing energy, and so forth.

SU 1126741 A discloses a device (see preamble of each of claim 1 and 2) comprising a flywheel in a body accommodating an intermediate casing on bearings. As the flywheel rotates, the intermediate casing is carried along by the air stream and it revolves at a speed equalling half to the rotating speed of the flywheel.

CA-A1-1144784 discloses a safety housing for a modem high speed rotating flywheel which is designed to dissipate the kinetic energy of the flywheel safely in the event of a catastrophic failure.

SUMMARY OF THE INVENTION

The invention has an object to implement a device for rotating body windage loss reduction, capable of rotating a rotating body at a high peripheral speed in an environment at atmospheric pressure or close to atmospheric pressure without producing a vacuum or low pressure condition while reducing fluid resistance loss at a low cost by making use of the conventional bearing technology, thereby enhancing efficiency of an energy storage device such as, for example, a flywheel, and so forth.

The problem previously described is solved by the features defined either in claim 1 or in claim 2. The device for rotating body windage loss reduction according to the invention has means whereby there are provided a rotating body held rotatably; and a covering rotating body installed on the outer side of the rotating body so as to enclose the same, held rotatably and coaxially with the rotating body. As a result, a relative speed between the rotating body and the covering rotating body is decreased, resulting in reduction of fluid resistance and leading to reduction in windage loss.

Further, if an additional optional number of the covering rotating bodies installed coaxially with the rotating body and covering the outer side of the device for rotating body windage loss reduction are provided, that is, a plurality of the covering rotating bodies are provided one over the other in sequence, a more advantageous effect is obtained, so that means are preferably provided whereby an optional number of the covering rotating bodies are installed so as to match required performance of the device.

Still further, bearing means are preferably provided between the rotating body and the covering rotating body adjacent thereto or between the covering rotating bodies adjacent to each other, in which case, bearings for the respective covering rotating bodies are disposed in series in relation to bearings for the rotating body, so that regardless of the number of the covering rotating bodies installed, bearing loss of the rotating body is not more than that in the case where only one covering rotating body is installed and consequently, the bearing loss of the rotating body is considerably reduced in comparison with a case where those bearings are disposed in parallel. In addition, since the number of revolutions of the bearings is based on a relative rotational speed between the covering rotating bodies adjacent to each other, a rotational speed of the bearings is decreased, thereby reducing the bearing loss occurring to the bearings.

Furthermore, with those features, an opening is preferably provided in a part of the covering rotating bodies, respectively, so that the opening serves as a flow path of gas when replacing air inside the device with the gas, thereby enhancing efficiency, while serving as the flow path of the gas due to variation in density thereof when a peripheral speed is increased, thereby providing means for reducing variation in pressure.

Further, a case covering the device is preferably provided so that hydrogen gas or helium gas is injected therein. By filling up the interior of the case with a fluid lower in density than air, windage loss can be further reduced. Still further, with the invention, the rotating body may be a flywheel, providing means for obtaining a highly efficient flywheel.

BRIEF DESCRIPTION OF THE DRAWINGS

Fig. 1 is a partially cutaway perspective view of a first embodiment of a device for rotating body windage loss reduction according to the invention;

Fig. 2 is a partially cutaway perspective view of a second embodiment of a device for rotating body windage loss reduction according to the invention;

Fig. 3 is a sectional view showing a part of a third embodiment of a device for rotating body windage loss reduction according to the invention;

Fig. 4 is a sectional view showing a part of a fourth embodiment of a device for rotating body windage loss reduction according to the invention;

Fig. 5 is a sectional view showing a part of a fifth embodiment of a device for rotating body windage loss reduction according to the invention;

Fig. 6 is a sectional view showing a part of a sixth embodiment of a device for rotating body windage loss reduction according to the invention;

Fig. 7 is a graph showing a relationship between a peripheral speed of a flywheel and pressure by the kind of a fluid;

Fig. 8 is a graph showing peripheral speeds or angular speeds as calculated without taking into account a rise in internal pressure, caused by centrifugal force, and as calculated taking into account the rise in the internal pressure, respectively; and

Fig. 9 is a graph showing a relationship between a peripheral speed of a rotating body and resistance torque with reference to the case of a flywheel only being installed, and various cases where the number of covering rotating bodies varies from 1 to 5, respectively.

PREFERRED EMBODIMENTS OF THE INVENTION

Preferred embodiments of a device for rotating body windage loss reduction according to the invention is described in detail hereinafter with reference to the accompanying drawings. In figures, identical elements are denoted by like reference numerals, omitting duplicated description thereof.

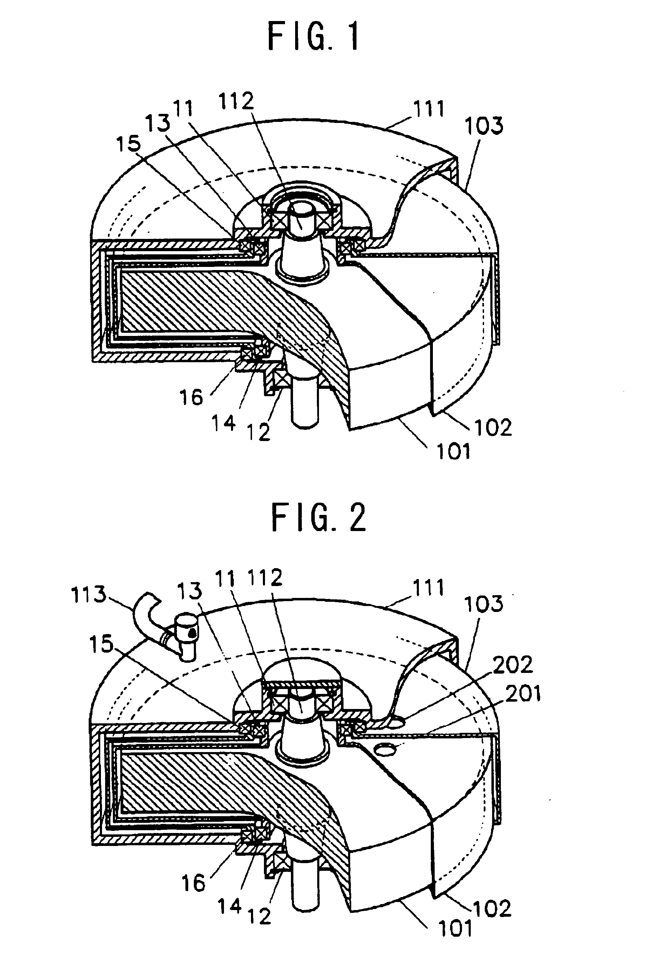

Fig. 1 is a partially cutaway perspective view of a first embodiment of a device for rotating body windage loss reduction according to the invention. Reference numeral 101 denotes a flywheel that is a type of rotating body having a shaft 112, for storing energy by rotation. Reference numeral 102 is a first covering rotating body formed of a thin sheet so as to cover the flywheel 101, having the same axis of rotation as that of the flywheel 101, and held in a freely rotatable manner. Reference numeral 103 is a second covering rotating body formed similarly of a thin sheet so as to cover the first covering rotating body 102, similarly having the same axis of rotation as that of the flywheel 101, and held in a freely rotatable manner.

Further, a case 111 provided with bearings 11, 12 for the flywheel 101 is installed further on the outer side of the second covering rotating body 103 so as to cover the flywheel 101, first covering rotating body 102, and second covering rotating body 103. The case 111 is fixedly attached to a supporting platform (not shown) .

Reference numerals 13, 14, and 15, 16 denotes a pair of bearings, respectively, and the bearings 13, 14 are provided between the first covering rotating body 102, and the second covering rotating body 103 while the bearings 15, 16 are provided between the second covering rotating body 103 and the case 111.

Fig. 2 is a partially cutaway perspective view of a second embodiment of a device for rotating body windage loss reduction according to the invention. In the figure, a first covering rotating body 102, and second covering rotating body 103 are installed in the same way as in Fig. 1, however, openings 201, 202 are provided on the plane surface thereof. The openings 201, 202 are formed through the first covering rotating body 102, and second covering rotating body 103, respectively, allowing gas to be movable therebetween.

A gas pipe 113 is attached to the case 111 enclosing those elements, and through the gas pipe 113, not only air but also a gas lighter in mass than air, such as, for example, hydrogen or helium, can be injected therein. Since the openings 201, 202 are provided in the first covering rotating body 102, and the second covering rotating body 103, respectively, upon injection of hydrogen, ingress of hydrogen occurs through the openings 201, 202, respectively, so that air inside the device in whole can be replaced with hydrogen. Further, there is a possibility that as a rotational speed is increased, gas pressure in parts of the respective covering rotating bodies, on the peripheral side thereof, becomes higher while gas pressure in the central parts thereof drops, whereupon parts of the respective covering rotating bodies, close to the central parts thereof, are deformed inwardly and conversely, the parts of the respective covering rotating bodies, close to the periphery thereof, are deformed outwardly due to a rise in internal pressure. However, such variation in the internal pressure can be reduced by providing the openings, so that it is possible to avoid occurrence of a phenomenon of the respective covering rotating bodies being collapsed.

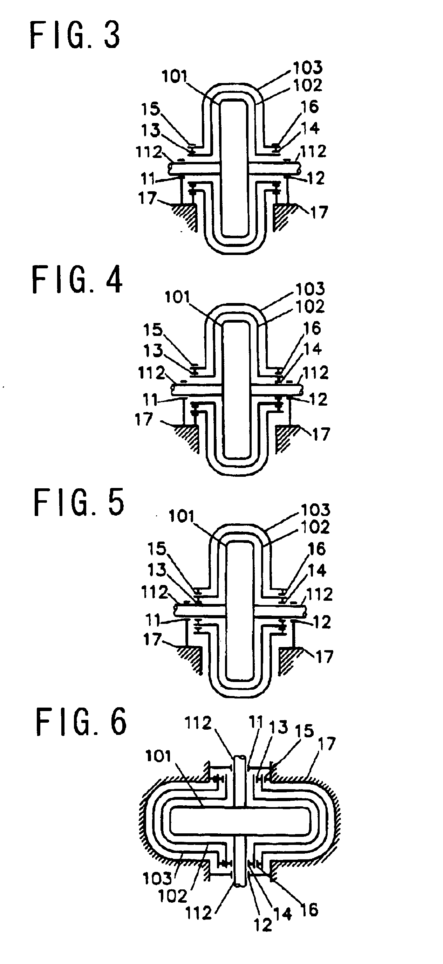

Figs. 3 through 6 are sectional views showing other embodiments of the invention. In these figures, reference numerals 11, 12 denotes bearings for supporting a shaft 112 of a flywheel 101, reference numerals 13, 14 denotes bearings for supporting a first covering rotating body 102, and reference numerals 15, 16 denotes bearings for supporting a second covering rotating body 103, respectively.

In Fig. 3, the bearings 11, 12 for the shaft 112 of the flywheel 101 are held by a supporting platform 17. The first covering rotating body 102 is freely rotatably held by the bearings 13, 14. The second covering rotating body 103 is freely rotatably held by the bearings 15, 16 that are in turn held by the supporting platform 17, respectively. In this case, the bearings 13, 14 are provided between the first covering rotating body 102 and the second covering rotating body 103 adjacent thereto, respectively.

In Fig. 4, the bearings 11, 12, for the flywheel 101 are the same as those in Fig. 3, however, the bearing 14, one of the bearings 13, 14 for supporting the first covering rotating body 102, is provided between the shaft 112 of the flywheel 101 and the first covering rotating body 102.

In Fig. 5, both the two bearings 13, 14 for supporting the first covering rotating body 102 are provided between the shaft 112 of the flywheel 101 and the first covering rotating body 102. In Fig. 6, a device in whole is disposed so as to be in the horizontal posture with the bearing 14, one of the bearings 13, 14 for supporting the first covering rotating body 102, being provided between the shaft 112 of the flywheel 101 and the first covering rotating body 102.

Thus, since bearing means are provided between the flywheel and the covering rotating body adjacent thereto, and between the covering rotating bodies adjacent to each other, the bearings for the respective covering rotating bodies are disposed in series in relation to the rotating body, so that bearing loss is considerably reduced in comparison with a case where the bearings are disposed in parallel. Further, since the bearing means also are provided between the covering rotating bodies adjacent to each other, a relative speed therebetween can be decreased, thereby reducing the bearing loss.

Now, there is described hereinafter the principle of reducing the windage loss, on which the invention is based.

Assuming that fluid density is p, a factor determined by Reynolds number, kinematic viscocity, etc. is A, a speed of a rotating body is V, it is known that fluid resistance D per a unit area of the rotating body having a high peripheral speed, such as a flywheel, and so forth, can be expressed by the following formula.

$$D = (\rho / 2) AV^2$$

Therefore, A being the factor, it is evident that the fluid resistance is proportional to the square of the speed. Accordingly, the fluid resistance to which the rotating body in whole is subjected is evidently proportional to the square of an angular speed thereof, and assuming that a torque to which the rotating body is subjected by the agency of the fluid resistance is Q, fluid density is p, a torque factor is B, the angular speed of the rotating body is $\omega$, the torque Q is expressed by the following formula.

$$Q = (\rho / 2) B\omega^2$$

Now, a thought is given to those formulas as applied to the invention. First, a case of only one covering rotating body being involved is deliberated on. On the assumption that the surface area of a flywheel 101 is substantially equal to that of the covering rotating body, and the flywheel 101 and the covering rotating body are being rotated with an angular speed $\omega_1$ of the rotating body being in balance with an angular speed $\omega_2$ of the covering rotating body, a torque $Q_1$ due to fluid resistance between the flywheel 101 and the rotating body 102, and a torque $Q_2$ due to fluid resistance between the covering rotating body 102 and fluid on the outer side of the covering rotating body 102 are found, respectively, as follows.

$$Q_1 = (\rho / 2) \ B \ (\omega_1 - \omega_2)^2$$

$$Q_2 = (\rho / 2) \ B\omega^2$$

Since both the flywheel 101 and the covering rotating body 102 are being rotated so as to be in balance with each other, and both the torques $Q_1$, $Q_2$ are equal to each other, there is established a relationship $Q_1 = Q_2$, leading to the following relationship based on the above-described formulas for $Q_1$, $Q_2$, respectively.

$$(\rho / 2) \ B \ (\omega_1 - \omega_2)^2 = (\rho / 2) \ B\omega^2$$

By simplifying the above-described formula, there is obtained the following expression

$$\omega_2 = \omega_1 / 2$$

This indicates that the covering rotating body 102 is rotated at the angular speed $\omega_2$ thereof, equivalent to 1 / 2 of the angular speed $\omega_1$ of the flywheel 101.

Next, a thought is given to a case where there exist an optional number of covering rotating bodies. Assuming that "n" of the covering rotating bodies are installed, and respective torques of the covering rotating bodies are designated $Q_1$, $Q_2$, $Q_3$, ..., $Q_{n-1}$, $Q_n$ are all identical in value, and respective relative angular speeds thereof are $\omega_1 / (n + 1)$, becoming equal to each other. Further, since the number of fluid layers including one in contact with the flywheel 101 and those in contact with the respective covering rotating bodies is (n + 1), assuming that a torque due to fluid resistance in the case of the flywheel 101 being rotated in as-exposed state is $Q_0$, a torque Qn due to fluid resistance in the case of the "n" of the covering rotating bodies being installed is expressed by the following expression:

$$Qn = Q_0 / (n + 1)^2$$

Accordingly, as the number of the covering rotating bodies is increased by 1, 2, 3, ..., resistance to which the flywheel 101 is subjected is decreased in that order down to 1/4, 1/9, 1/16, ... in relation to the resistance when the covering rotating body is not installed.

Thus, it is evident that if the flywheel 101 is provided with a multitude of the covering rotating bodies 102, fluid resistance against the flywheel 101 is reduced, thereby enabling the so-called windage loss to be reduced. In practice, when the multitude of the covering rotating bodies 102 are installed, the fluid layers in contact with the flywheel 101, and so forth as a whole come to be rotated at a large angular speed, so that an effect due to mass of fluid becomes non-negligible.

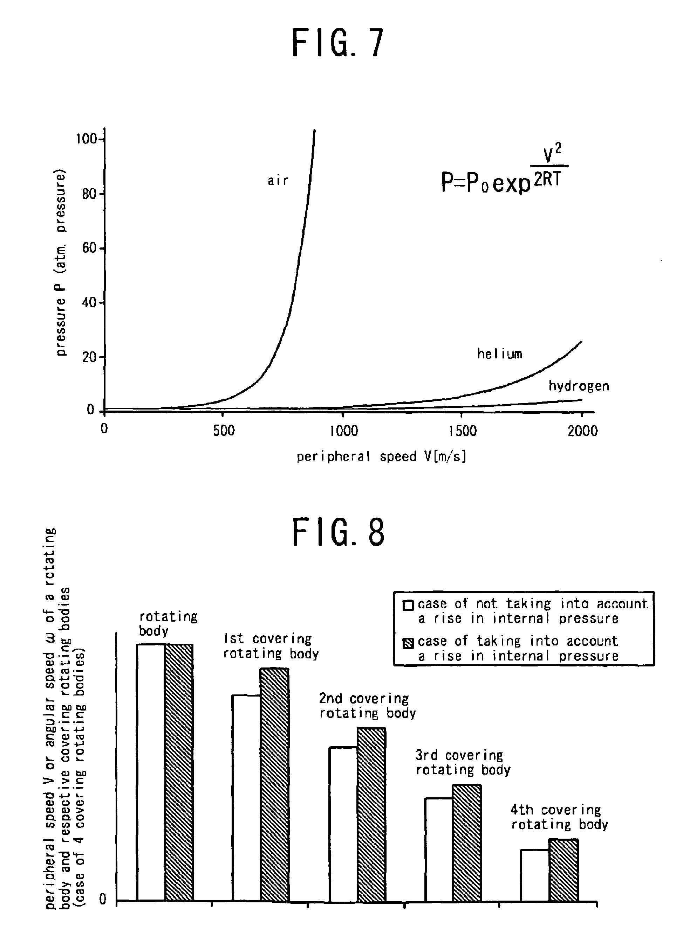

Fig. 7 is a graph showing a relationship between a peripheral speed of covering rotating bodies as well as a flywheel and pressure P caused by centrifugal force due to rotation of fluid and P can be found by expression shown in the figure. In the expression, the peripheral speed is denoted by V, gas constant R, absolute temperature T, and atmospheric pressure $P_0$. When the peripheral speed of the covering rotating bodies as well as the flywheel becomes extremely large, an effect of centrifugal force due to rotation of the fluid sandwiched between those elements becomes non-negligible, and there occurs an increase in pressure in the rim of the flywheel or the covering rotating bodies, so that higher sealing quality in parts thereof, in the vicinity of the rim, is desirable. In the case of a compressible fluid such as gas, in particular, the closer to the rim of the rotating body, the higher the density of the fluid becomes.

As is evident from the graph in Fig. 7, in the case of air, as the peripheral speed of the flywheel is increased, atmospheric pressure steeply increases from 4.42 atm at the peripheral speed of 500 m / s to 382.2 atm at 1000 m / s. In contrast, in the case of hydrogen, a calculated value of pressure becomes 5.34 atm even at 2000 m / s, indicating an extremely small increase in pressure in comparison with air.

Thus, in the case of air, it is practically impossible to render the peripheral speed to be at 1500 m / s, however, in the case of hydrogen, the pressure at the peripheral speed of 2000 m / s, 4 times as high as that in the case of air, is not much different from the pressure in the case of air at 1 / 4 of the peripheral speed for the case of hydrogen. If air is replaced with hydrogen or helium, lower in density than air, fluid resistance can be rendered far smaller than in the case of air, enabling windage loss to be further reduced. Further, since hydrogen has higher thermal conductivity, replacement of air with hydrogen enables use of components accompanied by heat generation, which have been unusable in the prior art.

Fig. 8 is a graph showing respective peripheral speeds of a flywheel and covering rotating bodies, as calculated for a case where a rise in internal pressure, caused by centrifugal force accompanying rotation of fluid, is not taken into account, and for a case where the rise in the internal pressure is taken into account, respectively. A peripheral speed of a first covering rotating body in the case of taking into account a rise in internal pressure becomes greater than that in the case of taking into account no rise in the internal pressure. A peripheral speed of a second covering rotating body similarly rises under the influence of a rise in internal pressure, however, since the peripheral speed of the second covering rotating body is smaller than that of the first covering rotating body, a ratio of an increase in the number of revolutions, due to the increase in the internal pressure, is smaller.

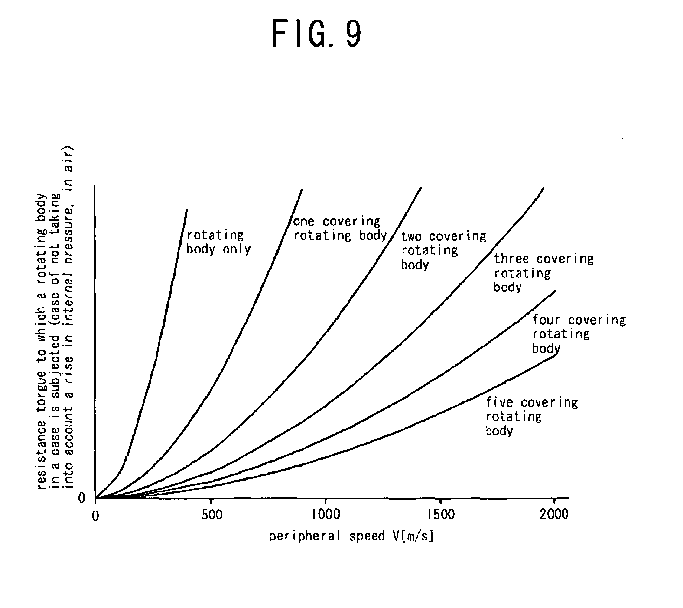

Fig. 9 is a graph showing a relationship between a peripheral speed of a rotating body and resistance torque with reference to the case of a flywheel only being installed, and various cases of the number of covering rotating bodies being 1 to 5, respectively. It is shown that, in the case where one covering rotating body is installed outside the periphery of the flywheel, the number of relative revolutions between the flywheel and a first covering rotating body becomes less, thereby lowering windage loss of the flywheel. In the case where a plurality of covering rotating bodies are installed, the number of relative revolutions between the first covering rotating body and the next covering rotating body similarly becomes less, so that additional reduction in windage loss, due to such a phenomenon, is obtained. However, as the number of the covering rotating bodies is increased, so a ratio of contribution to reduction in windage loss gradually decreases. If the number of the covering rotating bodies is increased, this will result in an increase in cost of a device, so that there is the need for designing after determination by comparing a merit of the reduction in the windage loss with a demerit of the increase in the cost of the device.

The invention has been specifically described on the basis of the embodiments as described above, however, it is to be pointed out that the scope of invention is not limited thereto. The invention is effective to such a rotating body as, for example, a canned pump, bearings, and so forth, besides the flywheel. Further, it would easily occur to those skilled in the art that since the invention is applicable to the canned pump as well, the invention is applicable to not only a case where the fluid is gas but also a case where the fluid is oil and so forth. Further, in the case of replacing air with hydrogen or helium, it is possible to reduce windage loss by mixing hydrogen or helium with air instead of replacing air in whole therewith. In case of adding hydrogen to air, it is necessary to select a mixing ratio with minimum possibility of catching fire.

As described in detail hereinbefore, with the device according to the invention, the windage loss of the rotating body is reduced by providing the covering rotating bodies, thereby enhancing efficiency of the device without keeping a rotational environment of the rotating body, such as a flywheel and so forth, in a vacuum condition, so that the invention is useful to a device for storing energy, such as the flywheel, and so forth.

**Claims**

1. Device for rotating body windage loss reduction, comprising:

   a rotating body (101) held rotatably;
   a covering rotating body (102) enclosing the rotating body, held rotatably and coaxially with the rotating body; and
   a fluid layer provided in respective gaps formed by selecting an inside diameter of the covering rotating body and a length thereof, in the direction of a rotating shaft (112), so as to be greater than an outside diameter of the rotating body and a length thereof, in the direction of the rotating shaft, respectively, wherein the fluid layer existing in the respective gaps has a function of being rotated following a rotational motion of the rotating body, and causing a rotational motion of the covering rotating body to occur by acting thereon to thereby rotate the same at a rotational speed smaller than that of the rotating body, and windage loss of the rotating body is reduced by the agency of the fluid layer interjacent between the rotating body and the covering rotating body and the fluid layer interjacent between the covering rotating body and outside thereof, respective rotational speeds of the fluid layers being sequentially reduced, **characterized in that** a case (111) having rigidity and covering the device in whole is provided on the outer side of the covering rotating body enclosing the device for rotating body windage loss reduction so as to serve as a supporting platform for the rotating shaft of the rotating body and the covering rotating body while the case and bearing means are rendered to be sealed in construction, and a connection for a pipe (113) linked with the interior of the case is provided on the outer surface of the case to enable adjustment of a gas inside the case and pressure of the gas, an opening (201) being provided in a part of the covering rotating body, to enable internal pressure of the covering rotating body provided inside the case to rapidly cope with adjustment of the pressure of the gas on the outside of the covering rotating body.

2. Device for rotating body windage loss reduction, comprising:

a rotating body (101) held rotatably;
a covering rotating body (102) enclosing the rotating body, held rotatably and coaxially with the rotating body; and
a fluid layer provided in respective gaps formed by selecting an inside diameter of the covering rotating body and a length thereof, in the direction of a rotating shaft (112), so as to be greater than an outside diameter of the rotating body and a length thereof, in the direction of the rotating shaft, respectively, wherein in the fluid layer existing in the respective gaps has a function of being rotated following a rotational motion of the rotating body, and causing a rotational motion of the covering rotating body to occur by acting thereon to thereby rotate the same at a rotational speed smaller than that of the rotating body, and windage loss of the rotating body is reduced by the agency of the fluid layer interjacent between the rotating body and the covering rotating body and the fluid layer interjacent between the covering rotating body and outside thereof, respective rotational speeds of the fluid layers being sequentially reduced, **characterized in that** an additional number of covering rotating bodies (103) is installed coaxially with the rotating body (101) so as to cover the outer side of the device for rotating body windage loss reduction.

3. Device for rotating body windage loss reduction according to claim 1 or 2, wherein bearing means are provided between the rotating body and the covering rotating body adjacent thereto or between the covering rotating bodies adjacent to each other.

4. Device for rotating body windage loss reduction according to claims 2 or 3, wherein a case (111) having rigidity and covering the device in whole is provided on the outer side of the covering rotating body enclosing the device for rotating body windage loss reduction so as to serve as a supporting platform for a rotating shaft of the rotating body and the covering rotating bodies while serving as protective means thereof.

5. Device for rotating body windage loss reduction according to claims 2 or 3, wherein a case (111) having rigidity and covering the device in whole is provided on the outer side of the covering rotating body enclosing the device for rotating body windage loss reduction so as to serve as a supporting platform for a rotating shaft of the rotating body and the covering rotating bodies while the case and bearing means are rendered to be sealed in construction, and a connection for a pipe (113) linked with the interior of the case is provided on the outer surface of the case to enable adjustment of a gas inside the case and pressure of the gas, an opening (201, 202) being provided in a part of the covering rotating bodies, respectively, to enable internal pressure of the covering rotating bodies provided inside the case to rapidly cope with adjustment of the pressure of the gas on the outside of the covering rotating bodies.

**Patentansprüche**

1. Vorrichtung zur Verwirbelungsverlustreduzierung für einen rotierenden Körper, umfassend:

einen drehbar gehaltenen rotierenden Körper (101) ;
einen abdeckenden rotierenden Körper (102), der den rotierenden Körper umgibt, der drehbar gehalten ist, und koaxial zum rotierenden Körper ist; und
eine Fluidschicht, die in entsprechenden Spalten vorgesehen ist, die durch Wählen eines inneren Durchmessers des abdeckenden rotierenden Körpers und einer Länge desselben gebildet ist, in der Richtung einer rotierenden Welle (112), so daß dieser bzw. diese größer ist als ein äußerer Durchmesser des rotierenden Körpers bzw. eine Länge desselben, in der Richtung der rotierenden Welle, wobei die Fluidschicht, die in den entsprechenden Spalten besteht, eine Funktion hat, einer Drehbewegung des rotierenden Körpers folgend gedreht zu werden und ein Auftreten einer Drehbewegung des abdeckenden rotierenden Körpers durch eine Wirkung auf diesen zu bewirken, um **dadurch** denselben mit einer Drehgeschwindigkeit zu drehen, die geringer ist als die des rotierenden Körpers, und wobei der Verwirbelungsverlust des rotierenden Körpers durch die Wirkung der zwischen dem rotierenden Körper und dem abdekkenden rotierenden Körper liegenden Fluidschicht und der zwischen dem abdeckenden rotierenden Körper und der Außenseite desselben liegenden Fluidschicht reduziert wird, wobei entsprechende Drehgeschwindigkeiten der Fluidschichten sequentiell reduziert sind,

**dadurch gekennzeichnet, daß**
auf der Außenseite des abdeckenden rotierenden Körpers ein Gehäuse (111) mit einer Steifigkeit und welches die Vorrichtung insgesamt abgedeckt, vorgesehen ist, die die Vorrichtung zur Verwirbelungsverlustreduzierung für einen rotierenden Körper umgibt, um als eine Trägerplattform der rotierenden Welle des rotierenden Körpers und des abdeckenden rotierenden Körpers zu dienen, während das Gehäuse und ein Lagermittel für eine Abdichtung beim Zusammensetzen gemacht sind und ein Anschluß für ein Rohr (113), verbunden mit der Innenseite des Gehäuses, auf der äußeren Oberfläche des Gehäuses vorgesehen ist, um ein Einstellen eines Gases im Innern des Gehäuses und eines Druckes des Gases zu ermöglichen, wobei eine Öffnung (201) in einem Teil des abdeckenden rotierenden Körpers vorgesehen ist, um zu ermöglichen, daß ein Innendruck des abdeckenden rotierenden Körpers, der im Innern des Gehäuses vorgesehen ist, rasch einer Einstellung des Drucks des Gases auf der Außenseite des abdeckenden rotierenden Körpers Rechnung trägt.

2. Vorrichtung zur Verwirbelungsverlustreduzierung für einen rotierenden Körper, umfassend:

einen drehbar gehaltenen rotierenden Körper (101);
einen abdeckenden rotierenden Körper (102), der den rotierenden Körper umgibt, der drehbar gehalten ist, und koaxial zum rotierenden Körper ist; und
eine Fluidschicht, die in entsprechenden Spalten vorgesehen ist, die durch Wählen eines inneren Durchmessers des abdeckenden rotierenden Körpers und einer Länge desselben gebildet ist, in der Richtung einer rotierenden Welle (112), so daß dieser bzw. diese größer ist als ein äußerer Durchmesser des rotierenden Körpers bzw. eine Länge desselben, in der Richtung der rotierenden Welle, wobei die Fluidschicht, die in den entsprechenden Spalten besteht, eine Funktion hat, einer Drehbewegung des rotierenden Körpers folgend gedreht zu werden und ein Auftreten einer Drehbewegung des abdeckenden rotierenden Körpers durch eine Wirkung auf diesen zu bewirken, um **dadurch** denselben mit einer Drehgeschwindigkeit zu drehen, die geringer ist als die des rotierenden Körpers, und wobei der Verwirbelungsverlust des rotierenden Körpers durch die Wirkung der zwischen dem rotierenden Körper und dem abdekkenden rotierenden Körper liegenden Fluidschicht und der zwischen dem abdeckenden rotierenden Körper und der Außenseite desselben liegenden Fluidschicht reduziert wird, wobei entsprechende Drehgeschwindigkeiten der Fluidschichten sequentiell reduziert sind,

**dadurch gekennzeichnet, daß**
eine zusätzliche Anzahl von abdeckenden rotierenden Körpern (103) koaxial zum rotierenden Körper (101) installiert ist, um die Außenseite der Vorrichtung zur Verwirbelungsverlustreduzierung für einen rotierenden Körper abzudekken.

3. Vorrichtung zur Verwirbelungsverlustreduzierung für einen rotierenden Körper gemäß Anspruch 1 oder 2, wobei Lagermittel zwischen dem rotierenden Körper und dem abdeckenden rotierenden Körper neben diesem oder zwischen den abdeckenden rotierenden Körpern benachbart zueinander vorgesehen sind.

4. Vorrichtung zur Verwirbelungsverlustreduzierung für einen rotierenden Körper gemäß Anspruch 2 oder 3, wobei ein Gehäuse (111) mit einer Steifigkeit und welches die Vorrichtung insgesamt abdeckt auf der Außenseite des abdeckenden rotierenden Körpers, der die Vorrichtung zur Verwirbelungsverlustreduzierung für einen rotierenden Körper umgibt, vorgesehen ist, um als eine Trägerplattform für eine rotierende Welle des rotierenden Körpers und der abdeckenden rotierenden Körper zu dienen, während er gleichzeitig als Schutzeinrichtung derselben dient.

5. Vorrichtung zur Verwirbelungsverlustreduzierung für einen rotierenden Körper nach Anspruch 2 oder 3, wobei ein Gehäuse (111) mit einer Steifigkeit und welches die Vorrichtung insgesamt abdeckt, auf der Außenseite des abdeckenden rotierenden Körpers vorgesehen ist, das die Vorrichtung zur Verwirbelungsverlustreduzierung für einen rotierenden Körper umgibt, um als eine Trägerplattform für eine rotierende Welle des rotierenden Körpers und der abdeckenden rotierenden Körper dient, während das Gehäuse und das Lagermittel für eine Abdichtung beim Zusammenbau gemacht sind, und ein Anschluß für ein Rohr (113), verbunden mit der Innenseite des Gehäuses, auf der äußeren Oberfläche des Gehäuses vorgesehen ist, um eine Einstellung eines Gases im Innern des Gehäuses und eines Drucks des Gases zu ermöglichen, wobei eine Öffnung (201, 202) jeweils in einem Teil der abdeckenden rotierenden Körper vorgesehen ist, um zu ermöglichen, daß ein Innendruck der abdeckenden rotierenden Körper, der im Innern des Gehäuses vorgesehen ist, rasch einer Einstellung des Drucks des Gases auf der Außenseite der abdeckenden rotierenden Körper Rechnung trägt.

**Revendications**

1. Dispositif pour une réduction de pertes par ventilation d'un corps rotatif, comprenant:

un corps rotatif (101) maintenu de manière rotative;
un corps rotatif de couverture (102) renfermant le corps rotatif, maintenu de manière rotative et coaxiale avec le corps rotatif; et
une couche de fluide fournie dans des jeux respectifs formés en sélectionnant un diamètre intérieur du corps rotatif de couverture et une longueur de celui-ci, dans la direction d'un arbre rotatif (112), afin d'être plus grands qu'un diamètre extérieur du corps rotatif et qu'une longueur de celui-ci, dans la direction de l'arbre rotatif, respectivement, où la couche de fluide existant dans les jeux respectifs a une fonction d'être mise en rotation suivant un mouvement de rotation du corps rotatif, et amenant un mouvement de rotation du corps rotatif de couverture à se produire en agissant sur ce dernier pour le mettre ainsi en rotation à une vitesse de rotation plus petite que celle du corps rotatif, et une perte par ventilation du corps rotatif est réduite par l'agencement de la couche de fluide intercalée entre le corps rotatif et le corps rotatif de couverture et la couche de fluide intercalée entre le corps rotatif de couverture et l'extérieur celui-ci, des vitesses de rotation respectives des couches de fluide étant séquentiellement réduites, **caractérisé en ce qu'**un boîtier (111) ayant une rigidité et recouvrant le dispositif dans son ensemble est fourni sur le côté extérieur du corps rotatif de couverture renfermant le dispositif pour une réduction de pertes par ventilation d'un corps rotatif afin de servir de plateforme de soutien pour l'arbre rotatif du corps rotatif et le corps rotatif de couverture tandis que le boîtier et des moyens de palier sont rendus de sorte à être scellés en construction, et une connexion pour un tuyau (113) lié à l'intérieur du boîtier est fournie sur la surface extérieure du boîtier pour permettre un ajustement d'un gaz à l'intérieur du boîtier et une pression du gaz, une ouverture (201) étant fournie dans une partie du corps rotatif de couverture, pour permettre à une pression intérieure du corps rotatif de couverture fourni à l'intérieur du boîtier de s'occuper rapidement de l'ajustement de la pression du gaz à l'extérieur du corps rotatif de couverture.

2. Dispositif pour une réduction de pertes par ventilation d'un corps rotatif, comprenant:

un corps rotatif (101) maintenu de manière rotative;
un corps rotatif de couverture (102) renfermant le corps rotatif, maintenu de manière rotative et coaxiale avec le corps rotatif; et
une couche de fluide fournie dans des jeux respectifs formés en sélectionnant un diamètre intérieur du corps rotatif de couverture et une longueur de celui-ci, dans la direction d'un arbre rotatif (112), afin d'être plus grands qu'un diamètre extérieur du corps rotatif et qu'une longueur de celui-ci, dans la direction de l'arbre rotatif, respectivement, où la couche de fluide existant dans les jeux respectifs a une fonction d'être mise en rotation suivant un mouvement de rotation du corps rotatif, et amenant un mouvement de rotation du corps rotatif de couverture à se produire en agissant sur ce dernier pour le mettre ainsi en rotation à une vitesse de rotation plus petite que celle du corps rotatif, et une perte par ventilation du corps rotatif est réduite par l'agencement de la couche de fluide intercalée entre le corps rotatif et le corps rotatif de couverture, et la couche de fluide intercalée entre le corps rotatif de couverture et l'extérieur de celui-ci, des vitesses de rotation respectives des couches de fluide étant séquentiellement réduites, **caractérisé en ce qu'**un nombre additionnel de corps rotatifs de couverture (103) est installé de manière coaxiale avec le corps rotatif (101) afin de couvrir le côté extérieur du dispositif pour une réduction de pertes par ventilation d'un corps rotatif.

3. Dispositif pour une réduction de pertes par ventilation d'un corps rotatif selon la revendication 1 ou 2, dans lequel des moyens de paliers sont fournis entre le corps rotatif et le corps rotatif de couverture qui lui est adjacent ou entre les corps rotatifs de couverture adjacents les uns aux autres.

4. Dispositif pour une réduction de pertes par ventilation d'un corps rotatif selon les revendications 2 ou 3, dans lequel un boîtier (111) ayant une rigidité et couvrant le dispositif dans son ensemble est fourni sur le côté extérieur du corps rotatif de couverture renfermant le dispositif pour une réduction de pertes par ventilation d'un corps rotatif afin de servir de plateforme de soutien pour un arbre rotatif du corps rotatif et des corps rotatifs de couverture tout en servant de moyen protecteur correspondant.

5. Dispositif pour une réduction de pertes par ventilation d'un corps rotatif selon les revendications 2 ou 3, dans lequel un boîtier (111) ayant une rigidité et couvrant le dispositif dans son ensemble est fourni sur le côté extérieur du corps rotatif de couverture renfermant le dispositif pour une réduction de pertes par ventilation d'un corps rotatif afin de servir de plateforme de soutien pour un arbre rotatif du corps rotatif et des corps rotatifs de couverture tandis que le boîtier et les moyens de paliers sont rendus de sorte à être scellés en construction, et une connexion pour un tuyau (113) lié à l'intérieur du boîtier est fournie sur la surface extérieure du boîtier pour permettre un ajustement d'un gaz à l'intérieur du boîtier et une pression du gaz, une ouverture (201, 202) étant fournie dans une partie des corps rotatifs de couverture, respectivement, pour permettre à une pression intérieure des corps rotatifs de couverture fournis à l'intérieur du boîtier de s'occuper rapidement d'un ajustement de la pression du gaz sur l'extérieur des corps rotatifs de couverture.

# FIG. 1

# FIG. 2

# FIG. 3

# FIG. 4

# FIG. 5

# FIG. 6

# FIG. 7

$$P = P_0 \exp^{\frac{V^2}{2RT}}$$

# FIG. 8

# FIG. 9

Graph: y-axis labeled "resistance torgue to which a rotating body in a case is subjected (case of not taking into account a rise in internal pressure, in air)". x-axis labeled "peripheral speed V[m/s]" with markings 0, 500, 1000, 1500, 2000. y-axis origin marked 0.

Curves labeled:
- rotating body only
- one covering rotating body
- two covering rotating body
- three covering rotating body
- four covering rotating body
- five covering rotating body

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 1126741 A
- CA 1144784 A1